# DEMANDE DE BREVET EUROPEEN

(11) **EP 0 873 809 A1**
(43) Date de publication de la demande: **28.10.1998**
(21) Numéro de dépôt: 97440040.0
(22) Date de dépôt: 23.04.1997
(51) Int. Cl.: B23K 1/00, B23K 33/00

(54) **Pièces destinées à être assemblées par soudure au bain de sel**

(71) Demandeur: AML Microtechnique Lorraine Société Anonyme, 57535 Marange-Silvange (FR)
(72) Inventeur: Limbach, Fabrice, 57070 Metz (FR)
(74) Mandataire: Rhein, Alain

(57) **Abrégé**

L'invention a trait à des pièces réalisées notamment dans un matériau métallique léger non ferreux, tel que l'aluminium ou un de ses alliages, et destinées à être assemblées par soudure au bain de sel, au niveau de la jonction (1) de ces pièces (2, 3) et, plus particulièrement, des surfaces en regard (4, 5) de ces dernières étant assurée la présence d'un métal d'apport. En fait, selon l'invention, à hauteur de leur jonction (1), les pièces (2, 3) à souder sont maintenues en contact les unes avec les autres, au travers de zones de contact linéaires et/ou ponctuelles (6) résultant de la déformation et/ou de l'usinage et/ou de tout autre procédé approprié, de toute ou partie de l'une au moins des surfaces en regard (4, 5) pour préserver entre lesdites pièces à souder (2, 3) des espaces (7) déterminés, adaptés à une soudure au bain de sel.

## Description

L'invention a trait à des pièces réalisées notamment dans un matériau métallique léger non ferreux, tel que l'aluminium ou un de ses alliages, et destinées à être assemblées par soudure au bain de sel, au niveau de la jonction de ces pièces et, plus particulièrement, des surfaces en regard de ces dernières étant assurée la présence d'un métal d'apport.

Ainsi, tel que cela apparaît au travers de la description ci-dessus, la présente invention trouvera son application dans le domaine de l'assemblage de pièces réalisées dans un matériau métallique léger, non ferreux, tel que l'aluminium ou un de ses alliages.

Plus particulièrement, dans ce contexte il est usuel de faire appel à la technique de soudobrasage au bain de sel consistant à immerger les pièces à assembler dans un bain dont la température est intermédiaire entre la température de fusion du métal des pièces à souder et celle d'un métal d'apport dont on assure la présence à hauteur de leurs jonctions.

A ce propos, il est constant que si l'on souhaite réaliser une soudure de qualité il est nécessaire que le jeu entre les pièces à assembler, c'est à dire la distance séparant les surfaces en regard de ces dernières, respecte une valeur déterminée pour assurer une bonne diffusion par capillarité du métal d'apport. Pour cela il est indispensable, avant soudure, de positionner, précisément, lesdites pièces les unes par rapport aux autres de sorte que ce jeu entre elles soit sensiblement constant. A ce moment là il convient, en outre, d'immobiliser les pièces entre elles à l'aide de moyens appropriés avant d'immerger l'ensemble dans le bain de sel en température.

Différentes solutions sont employées, pour l'heure, pour assurer une telle immobilisation des pièces entre elles. Tout particulièrement il est connu de concevoir ces pièces de manière emboîtable, la partie mâle présentant des dimensions sensiblement supérieures au logement défini par la partie femelle nécessitant un assemblage en force ou encore, par exemple, par retrait de la pièce mâle autour de la pièce femelle après dilatation thermique. Après une telle immobilisation on vient disposer un cordon de métal d'apport, notamment sous forme d'une pâte, au niveau de la jonction de ces pièces avant de les plonger dans le bain de sel. Cependant, l'absence de jeu suffisant entre les pièces à assembler empêche une bonne diffusion du métal d'apport en fusion entre leur surface en regard. Il en résulte une soudure partielle qui, le cas échéant, peut être non étanche.

Pour garantir sa présence entre ces surfaces en regard des pièces à souder, le métal d'apport peut se présenter, sous forme d'une feuille que l'on vient interposer entre les pièces ajustées selon des tolérances serrées.

L'inconvénient principal de ce procédé provient du fait que le refroidissement des pièces après soudure et lors de la trempe, ne s'effectue pas uniformément. En effet, ce refroidissement débute, nécessairement, par la partie la plus externe des pièces pour s'étendre vers la partie interne de la jonction et s'accompagne d'un retrait tout aussi irrégulier de la matière.Si la quantité de métal d'apport en présence est insuffisante, ce phénomène engendre une discontinuité de la soudure au niveau des surfaces en regard. En conséquence, cette soudure est, là encore, de mauvaise qualité et entraîne une fragilisation du matériau pouvant conduire à des fuites ou à la rupture de la liaison entre les pièces.

Il est cependant possible de pallier, du moins en partie, à ce problème. En effet, il suffit de faire en sorte que le métal d'apport soit présent en quantité suffisante. Pour cela, l'on vient faire déborder la feuille que définit ce métal d'apport hors des surfaces en regard des pièces à souder.

Si en procédant ainsi, il est, certes, possible de minimiser les inconvénients liés au retrait de la matière, lors de la trempe, il est nécessaire, une fois la soudure solidifiée d'ébavurer les pièces afin de leur conférer un état de surface satisfaisant. Cela se traduit, évidemment, par un coût de revient accru des pièces ainsi assemblées.

Il est encore connu de réaliser des pièces emboîtables ajustées non pas selon des tolérances serrées, mais en fonction du jeu qu'il est nécessaire de préserver entre les surfaces en regard de ces pièces pour assurer une soudure optimale. Dans ces conditions, l'immobilisation de ces pièces avant soudure s'effectue, souvent, au travers d'une opération de poinçonnage ou par matage de l'une ou l'autre de ces pièces. Cependant, de telles opérations, souvent menées manuellement, se traduisent, inéluctablement, par des déformations non maîtrisées des pièces. Or, la technique de soudure au bain de sel est le plus fréquemment employée pour l'assemblage de pièces de précision.

En outre, une opération de poinçonnage ou de matage a pour conséquence, usuellement, de provoquer le décentrage des pièces emboîtées les unes par rapport aux autres. En conséquence, au niveau de leur surface en regard, ces pièces sont, en partie, maintenues en contact, sans jeu, l'une par rapport à l'autre, tandis que, par ailleurs, elles sont espacées de manière trop importante pour permettre une bonne diffusion du métal d'apport par capillarité.

En conséquence, dans ce domaine du soudobrasage au bain de sel, l'on se heurte, principalement, à deux impératifs quelque peu antagonistes :
- garantir entre les pièces à souder un jeu régulier déterminé en fonction des conditions de soudure;
- immobilisation parfaite des pièces les unes par rapport aux autres avant soudure.

Dans tous les cas, il apparaît de manière évidente que ces impératifs sont difficilement conciliables pour l'heure.

En fait, la présente invention a su répondre à ce problème, ceci de manière particulièrement simple et ingénieuse.

A cet effet, l'invention a trait à des pièces réalisées notamment dans un matériau métallique léger non ferreux, tel que l'aluminium ou un de ses alliages, et destinées à être assemblées par soudure au bain de sel, au niveau de la jonction de ces pièces et, plus particulièrement, des surfaces en regard de ces dernières étant assurée la présence d'un métal d'apport, caractérisées par le fait qu'à hauteur de leur jonction, les pièces à souder sont maintenues en contact, les unes avec les autres, au travers de zones de contact linéaires et/ou ponctuelles résultant de la déformation et/ou de l'usinage et/ou tout autre procédé approprié, de toute ou partie de l'une au moins des surfaces en regard pour préserver entre lesdites pièces à souder des espaces déterminés adaptés à une soudure au bain de sel.

Avantageusement, l'une au moins des surfaces en regard des pièces à assembler est, en tout ou partie, moletée de manière à déterminer des créneaux et/ou des pointes et/ou des rainures et/ou des bossages à même de définir lesdites zones de contact linéaires et/ou ponctuelles après assemblage des pièces.

Avantageusement, dans le cadre de pièces destinées à être emboîtées les unes dans les autres, la section nominale de la partie mâle et la section du logement de la partie femelle, sont ajustées selon des tolérances serrées.

Les avantages résultant de la présente invention consistent, essentiellement, en ce qu'au travers des zones de contact linéaires et/ou ponctuelles entre les surfaces en regard des pièces à assembler, l'on gère, de manière très précise, les espaces préservés entre ces pièces et, par conséquent, la diffusion du métal d'apport en fusion lors de la soudure. Tout particulièrement, ces espaces peuvent être définis de manière à assurer une diffusion par capillarité optimale. De plus, elles sont à même de créer des réserves suffisantes de métal d'apport permettant, avantageusement, de répondre au problème du retrait de la matière au cours de l'opération de trempe.

En définitive, dans le cas particulier de pièces emboîtables, celles-ci peuvent être ajustées avec des tolérances serrées permettant de les immobiliser, aisément, les unes par rapport aux autres sans que cela ne pose de problème de diffusion du métal d'apport au niveau de leur jonction. En effet, cette diffusion du métal d'apport peut se faire librement entre les zones de contact quasi ponctuelles entre les pièces.

En fait, il convient d'observer qu'au moment même de la soudure et en raison des surfaces de contact très réduites que procure, par exemple, une succession de créneaux ou encore des pointes obtenues par moletage, les métaux des pièces à souder, d'une part, et le métal d'apport, d'autre part, sont amenés à s'interpénétrer de manière régulière sur l'ensemble des surfaces en regard de ces pièces à souder, conférant une parfaite uniformité à la soudure proprement dite.

La présente invention est décrite plus en détail dans la description qui va suivre se rapportant à un mode de réalisation donné à titre d'exemple indicatif et qui est illustré dans les dessins joints en annexe.
La figure 1 est une vue schématisée et en perspective de deux pièces mises bout à bout et destinées à être assemblées par une opération de soudobrasage, ces pièces étant configurées, au niveau de leur surface en regard, conformément à la présente invention ;
La figure 2 illustre, de manière schématisée, deux pièces emboîtées selon l'invention ;
La figure 3 est une vue similaire à la figure 2 illustrant un autre mode de réalisation ;
La figure 4 représente, de manière schématisée, une pièce linéaire, destinée, là encore, à être emboîtée dans une autre pièce pour leur assemblage par soudobrasage ;
La figure 5 représente, de manière schématisée, un assemblage de deux pièces à l'aide d'un manchon.

Les figures 6 et 7 illustrent de manière schématisée et en section deux pièces de type emboîtable.

La présente invention trouvera son application dans le domaine de l'assemblage par soudobrasage au bain de sel notamment de pièces réalisées dans un matériau métallique léger non ferreux, tel que l'aluminium ou un de ses alliages.

Plus particulièrement dans le cadre de cette technique, l'on vient assurer la présence d'un métal d'apport au niveau de la jonction 1 de deux pièces 2, 3 qu'il convient de liaisonner a hauteur de leur surface en regard 4, 5. En fait, une fois ces pièces 2, 3 parfaitement immobilisées l'une par rapport à l'autre, elles sont immergées dans un bain de sel à une température supérieure à la température de fusion du métal d'apport et inférieure à celle des pièces à souder. A cet instant, ce métal d'apport, à l'état fondu, diffuse, par capillarité, entre ces surfaces en regard 4, 5. L'ensemble est ensuite retiré du bain de sel et refroidi, généralement au travers d'une opération de trempe.

De manière à maîtriser, parfaitement, cette diffusion du métal d'apport en fusion, garant de la qualité de la soudure qui en résulte, à hauteur de leur jonction 1, les pièces à souder 2, 3, sont, selon l'invention, maintenues en contact l'une avec l'autre au travers de zones de contact 6 linéaires et/ou ponctuelles résultant de la déformation et/ou de l'usinage et/ou tout autre procédé approprié de toute ou partie de l'une au moins des surfaces 4, 5 en regard. En définitif, ceci permet de préserver entre lesdites pièces 2, 3 à souder des espaces 7 déterminés parfaitement par rapport aux paramètres d'une soudure au bain de sel optimale.

Plus précisément, l'objectif visé au travers de la présente invention consiste à maîtriser, parfaitement, ces espaces 7 entre deux pièces à souder et qui vont être déterminants pour l'obtention d'une diffusion optimale du métal d'apport.

Selon un mode de réalisation avantageux, ces zones de contact 6 linéaires et/ou ponctuelles sous forme de créneaux et/ou de pointes et/ou de rainures et/ou de bossages sont obtenues soit par déformation, usinage ou moulage voire encore au travers d'une combinaison de ces différentes solutions. En fait, la technique la plus appropriée est, certainement, le moletage permettant d'aboutir à une déformation parfaitement contrôlée de la surface 4, 5 en question de l'une au moins de ces pièces 2,3.

A ce propos, l'on connaît, d'ores et déjà, différentes possibilités de moletage, toutes applicables au présent cas d'espèce. Tout particulièrement, il est connu le moletage linéaire permettant de définir des zones de contact linéaires entre les pièces à assembler, le moletage croisé ou encore le moletage ponctuel conduisant, souvent, à des zones de contact ponctuelles. L'on peut encore imaginer une combinaison de ces différentes solutions de moletage pour aboutir au résultat recherché.

Ainsi, si, dans les différentes figures du dessin en annexe, les zones de contact 6 ont été représentées, notamment dans le cas de pièces emboîtées, sous forme d'une succession de traits parallèles entre eux et, qui plus est, orientés, axialement par rapport auxdites pièces, il ne s'agit, là, que d'une représentation schématisée et la présente invention n'est nullement limitée à une telle disposition des zones de contact 6. Tout particulièrement, celles-ci peuvent être orientées perpendiculairement à la direction d'emboîtement desdites pièces. Notamment dans le cas de pièces de révolution, lesdites zones de contact 6 peuvent être définies par des déformations périphériques au niveau d'une pièce mâle et venant définir, par exemple, un ou plusieurs bourrelets sur le pourtour de cette dernière, à hauteur de sa surface à souder. Bien sûr, dans le cadre d'une pièce femelle, de tels bourrelets peuvent être définis au niveau de sa paroi interne correspondant à la surface en regard de celle de la pièce mâle.

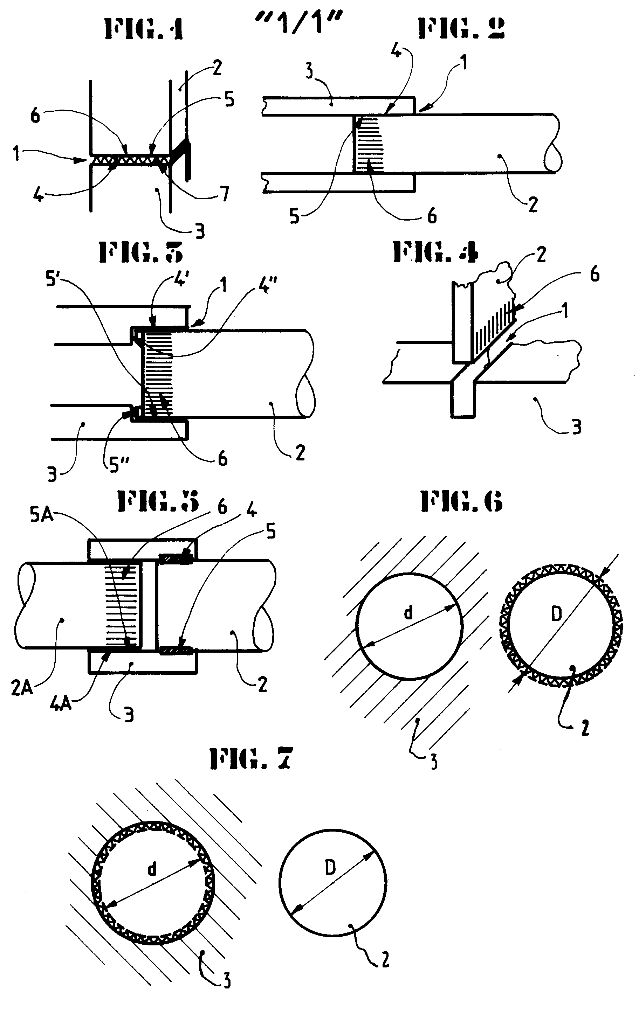

Il convient, encore, de noter que s'il est plus facile de ménager des créneaux et/ou des pointes et/ou des rainures et/ou des bossages que ce soit par déformation, usinage ou autre en périphérie de la pièce mâle 2 tel que représenté dans les figures 2 à 4, l'on n'est nullement limité à une telle solution puisque, conformément à la définition de l'invention, de tels créneaux et/ou pointes et/ou rainures et/ou bossages peuvent encore être ménagés exclusivement ou en combinaison au niveau de la surface à souder de la pièce femelle 3.

La figure 5 illustre une combinaison de ces différentes solutions dans la mesure où l'on voit, ici, l'assemblage de deux pièces mâles 2, 2A assemblées au moyen d'un manchon constituant la pièce femelle 3. Ainsi, cette dernière comporte, au niveau de sa surface 5 en regard avec la pièce mâle 2 lesdits créneaux et/ou pointes et/ou rainures et/ou bossages définissant les zones de contact 6. Contrairement, la pièce mâle 2A est, ici, par exemple moletée sur sa surface 4A en regard de la surface 5A correspondant à la pièce femelle 3.

Comme visible dans la figure 4, la présente invention est applicable à toute forme de pièces emboîtables.

Par ailleurs, il convient d'observer que les surfaces en regard 4, 5 de pièces 2, 3 notamment de type mâle-femelle, peuvent se décomposer en différentes parties, respectivement 4', 4'', et 5', 5''. Ainsi, sur chacune de ces parties de surface 4', 4'' et/ou 5', 5'' ou uniquement sur certaines d'entre elles peuvent être réalisés des créneaux et/ou des pointes et/ou des rainures et/ou des bossages permettant de définir des zones de contact 6 réduites entre les pièces 2, 3 à souder, pour une parfaite diffusion du métal d'apport en fusion au niveau de chacune de ces parties de surfaces en regard, respectivement 4', 5' ; 4'', 5''.

Selon une autre particularité de la présente invention les pièces mâle et femelle, de type emboîtable, sont ajustées selon des tolérances serrées. Ainsi, si l'on prend le cas particulier de pièces de forme cylindrique représentées dans les figures 6 et 7 le diamètre nominal D de la pièce mâle 2 est ajusté avec une tolérance négative au diamètre interne d de la pièce femelle 3. Il convient de préciser que le diamètre nominal D d'une pièce mâle 2 correspond au diamètre hors tout de cette dernière, c'est à dire y compris les éventuelles excroissances que peuvent définir, en périphérie de cette pièce mâle 2, les créneaux et/ou les pointes et/ou les rainures et/ou les bossages, notamment lorsque ceux-ci sont issus d'une opération de déformation, telle que le moletage. De même, dans le cadre d'une pièce femelle 3, le diamètre interne d correspond au cercle passant par le sommet de telles excroissances.

Il convient d'observer que de telles tolérances négatives peuvent résulter, précisément, de la déformation imprimée à l'une et/ou l'autre surface en regard 4, 5 de ces pièces mâle et femelle 2, 3 à souder alors que celles-ci ont été ajustées, préalablement, selon des tolérances positives. Une telle manière de faire permet, le cas échéant, de limiter la force d'emboîtement de la pièce mâle 2 dans la pièce femelle 3 tout en assurant la fonction recherchée à savoir l'immobilisation de cette pièce mâle 2 par rapport à ladite pièce femelle 3 au cours de l'opération de soudure.

On remarquera qu'il résulte d'une telle conception un parfait centrage de la pièce mâle 2 dans la pièce femelle 3 et, en conséquence, une parfaite diffusion du métal d'apport sur toute leur surface en regard 4, 5. En effet, en raison des zones de contact 6 limitées et parfaitement réparties sur ces surfaces en regard 4, 5 l'on gère, avec précision, les espaces 7 préservés entre ces dernières.

## Revendications

1. Pièces réalisées notamment dans un matériau métallique léger non ferreux, tel que l'aluminium ou un de ses alliages, destinées à être assemblées par soudure au bain de sel, au niveau de la jonction (1) de ces pièces (2, 3) et, plus particulièrement, des surfaces en regard (4, 5) de ces dernières étant assurée la présence d'un métal d'apport, caractérisées par le fait qu'à hauteur de leur jonction (1), les pièces (2, 3) à souder sont maintenues en contact les unes avec les autres, au travers de zones de contact (6) linéaires et/ou ponctuelles résultant de la déformation et/ou de l'usinage et/ou tout autre procédé approprié, de toute ou partie de l'une au moins des surfaces en regard (4, 5) pour préserver entre lesdites pièces à souder (2, 3) des espaces (7) déterminés, adaptés à une soudure au bain de sel.

2. Pièces selon la revendication 1, caractérisées par le fait que l'une au moins des surfaces en regard (4, 5) est moletée de manière à déterminer des créneaux et/ou pointes et/ou rainures et/ou bossages destinés à définir les zones de contact (6) linéaires et/ou ponctuelles.

3. Pièces selon la revendication 2, caractérisées par le fait que le moletage est du type linéaire et/ou croisé et/ou ponctuel

4. Pièces selon l'une quelconque des revendications précédentes, caractérisées par le fait qu'elles comportent, au niveau de leur jonction (1), des surfaces en regard (4, 5) se décomposant en différentes parties, respectivement (4', 4'') ; (5', 5''), sur chacune de ces parties de surfaces (4', 4'' et/ou 5', 5'') où sur certaines d'entre-elles étant réalisés des créneaux et/ou des pointes et/ou des rainures et/ou des bossages, à même de définir des zones de contact (6) linéaires et/ou ponctuelles entre les pièces (2, 3) à souder.

5. Pièces selon l'une quelconque des revendications précédentes et se présentant sous forme d'une pièce mâle (2) et femelle (3) du type emboîtable, caractérisées par le fait que lesdites pièces (2, 3) sont ajustées selon des tolérances serrées.

6. Pièces selon la revendication 5, caractérisées par le fait qu'au niveau de l'une au moins des surfaces en regard (4, 5) des pièces (2, 3) de type emboîtable est réalisée une déformation du type moletage, de manière à définir des zones de contact linéaires et/ou ponctuelles (6), ladite déformation conférant auxdites pièces (2, 3) un ajustage selon des tolérances négatives.
